# EUROPEAN PATENT APPLICATION

(11) **EP 2 863 581 A1**
(43) Date of publication of application: **22.04.2015**
(21) Application number: 14189270.3
(22) Date of filing: 16.10.2014
(51) Int. Cl.: H04L 12/24

(54) **Generation at runtime of definable events in an event based monitoring system**

(30) Priority: 18.10.2013 US 201314057906
(71) Applicant: Telefonaktiebolaget L M Ericsson (publ), 164 83 Stockholm (SE)
(72) Inventor: Redal Pena, Hector, 28032 Madrid (ES)
(74) Representative: Elzaburu S.L.P.

(57) **Abstract**

A system and methods for updating event definitions to a control file of an event based monitoring (EBM) server in a wireless communication network are disclosed. According to one aspect, the invention provides a method for updating event definitions without an exchange of a complete control file containing updated and non-updated event definitions between at least one EBM client and the EBM server. The method includes receiving at an EBM client a new definition of an event from one of an operational unit and an operator. The new definition includes an event identifier and a condition, the fulfillment of which triggers sending the new definition of the event to the EBM server. The method also includes sending a configuration change record to the EBM server. The configuration change record informs the EBM server of the new definition of the event to enable the EBM server to update the control file.

## Description

### TECHNICAL FIELD

The present invention relates to event based monitoring (EBM), and in particular to generation of definable events at runtime in an EBM system.

### BACKGROUND

Event Based Monitoring (EBM) is a feature of a communication network that provides network operators and customers a tool for online event reporting. EBM can be used by an operator or customer to monitor node and subscriber behavior. Information concerning a change of status of a subscriber in the network can be obtained by analyzing information collected by an EBM system.

Currently, events sent from an event based monitoring (EBM) client node acting as an event generator, to an EBM server node acting as an event consumer, are based on definitions of the events included in a control file, typically an extensible markup language (xml) file, which is shared by the client node and the server node. For example, a policy and charging rules function (PCRF) acting as an EBM client node may be configured to communicate an occurrence of events to an external post processing system acting as an EBM server. The EBM server may then decode and post-process the event to provide information concerning the event to a network operator managing the EBM server. The information concerning the event depends upon the type of event, and may include information about subscriber behavior, which services the subscriber is using and when the use occurs, frequencies used by the subscriber, etc.

The control file containing the definition of events is created at startup, for example, by a network operator, or by a service provider. These are called hardcoded events since they are events whose structure does not change or very seldom change. There are currently three types of events sent through the communication channel from EBM client node to EBM server node: the header event, the record event, and the error event. The header event initiates communication between the EBM client node and the EBM server node. The record event conveys the event generated at the EBM client node. The error event informs the EBM server of an error occurring in the EBM client node.

Currently there is not a way to send an event to an EBM server whose definition has not been already included in the control file, such as new events and updated events. If a network operator needs to define a new event or modify the definition of an existing event between an EBM client and the EBM server, a new control file including the new or modified event must be deployed by sending the new control file to all clients and to the server. The procedure for deploying a new control file - which may include only small changes - is time consuming and cumbersome,typically requires manual intervention by a network operator, and wastes bandwidth, computing and network resources.

### SUMMARY

Methods and systems for updating event definitions to a control file of an event based monitoring (EBM) server in a wireless communication network are disclosed. According to one aspect, the invention provides a method for updating event definitions, the update avoiding an exchange of a complete control file having updated and non-updated event definitions between at least one EBM client and the EBM server. The method includes receiving at an EBM client a new definition of an event from one of an operational unit and an operator. The new definition includes an event identifier and a condition, the fulfillment of which triggers sending the event to the EBM server. The method also includes sending a configuration change record to the EBM server. The configuration change record informs the EBM server of the new definition of the event to enable the EBM server to update the control file.

According to this aspect, in some embodiments, the method further includes generating an event in response to fulfillment of the condition and sending the event to the EBM server. In some embodiments, the new definition of the event includes a list of at least one parameter further defining relevant information concerning the event. In some embodiments, the control file is an xml file. In some embodiments, the EBM client is a policy and charging rules function, PCRF, and the condition is an accumulated usage of a reporting group for a subscriber. In some embodiments, the EBM client is a policy and charging rules function, PCRF, and the condition is a notification to the PCRF of reception of a general packet radio service, GPRS, tunneling protocol, GTP, request at a policy and charging enforcement function, PCEF. In some embodiments, the EBM client is a policy and charging rules function, PCRF, and the condition is a field value of a media component indicated by an application function, AF. In some embodiments, the EBM client is a policy and charging rules function, PCRF, and the condition is a reception of a RADIUS message from a broadband remote access server, BRAS. In some embodiments, the EBM client is a policy and charging rules function, PCRF, and the condition is a notification to the PCRF of reception of a general packet radio service, GPRS, tunneling protocol, GTP, request at a bearer binding and event reporting function, BBERF.

According to another aspect, the invention provides a method of updating event definitions to a control file of an event based monitoring, EBM, server in a wireless communication network, the update avoiding an exchange of a complete control file with updated and non-updated event definitions between at least one EBM client and the EBM server. The method includes receiving at the EBM server from an EBM client a configuration change record, the configuration change record including a new definition of an event. A control file at the EBM server is updated to one of include and modify the new definition. The method includes receiving at the EBM server an event generated by the EBM client, the event defined by the configuration change record. The method also includes looking up the event in the control file of the EBM server to determine that the event is defined. The event is decoded at the EBM server based on information provided in the configuration change record.

According to this aspect, in some embodiments, the configuration change record includes an event identifier and a condition, the fulfillment of which triggers the new event being received at the EBM server. In some embodiments, the configuration change record further includes a client identifier identifying the EBM client that provides the configuration change record. In some embodiments, the control file includes definitions from a plurality of EBM clients, the definitions being associated with respective EBM clients via client identifiers. In some embodiments, the configuration change record includes a field indicating a version of the control file being used by the EBM client. In some embodiments, the configuration change record includes a parameter list and a description and value of each parameter in the list, the parameters depending upon the event.

According to another aspect, the invention provides an EBM system that includes an EBM client and an EBM server. The EBM client is configured to receive a new definition of an event from a system associated with an operator. The EBM client is also configured to send a configuration change record containing the new definition of the event to an EBM server. The EBM server is configured to receive the configuration change record, and update a control file having event definitions to one of include and modify the new definition of the event.

According to this aspect, in some embodiments, the EBM client is further configured to determine if a condition related to the event is fulfilled, and to transmit the event to the EBM server if the condition is fulfilled. In some embodiments the EBM server is further configured to compare the event to event definitions contained in the control file, and decode the event if the event definition is contained in the control file. In some embodiments, the configuration change record includes an event identifier and a description of the condition. In some embodiments, the condition is defined by an operator at a broadband remote access server, BRAS. In some embodiments, the condition is defined by an operator at an operation charging system, OCS.

### BRIEF DESCRIPTION OF THE DRAWINGS

FIG. 1 is a block diagram of an exemplary EBM system constructed in accordance with principles of the present invention;
FIG. 2 is diagram of a procedure for updating and communicating events in real time in accordance with principles of the present invention;
FIG. 3 is a diagram of a procedure for updating and communicating events in real time when a policy charging and enforcement function (PCEF) provides the condition that triggers a new event;
FIG. 4 is a diagram of a procedure for updating and communicating events in real time when an application function (AF) provides the condition that triggers a new event;
FIG. 5 is a diagram of a procedure for updating and communicating events in real time when a charging system provides the condition that triggers a new event; and
FIG. 6 is a diagram of a procedure for updating and communicating events in real time when a policy charging and enforcement function (PCEF) acts as an EBM client.

### DETAILED DESCRIPTION

Before describing in detail exemplary embodiments that are in accordance with the present invention, it is noted that the embodiments reside primarily in combinations of apparatus components and processing steps related to updating a control file used in event based monitoring. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

Embodiments described herein illustrate a method and system for updating a control file used in an event based monitoring (EBM) system. A new record type is introduced and referred to herein as a configuration change record. The configuration change record is sent through the communication channel between the EBM client and the EBM server. The configuration change record informs the EBM server of a definition of a new event or a modification of a definition of an existing event. An example of the configuration change record is shown in Table 1 as follows:

**TABLE 1**

| **Pos** | **Description** | **Bytes** | **Type** | **Value/Range** |
|---|---|---|---|---|
| 0 | Record Length | 2(1) | Unsigned short | [4...65535] |
| 1 | Record Type | 1 | Unsigned char | 5 |
| 4 | Year (4 digits) | 2 | Unsigned short | [2000...] |
| 5 | Month | 1 | Unsigned char | [1...12] |
| 6 | Day | 1 | Unsigned char | [1...31] |
| 7 | Hour | 1 | Unsigned char | [0...23] |
| 8 | Minute | 1 | Unsigned char | [0...59] |
| 9 | Second | 1 | Unsigned char | [0...60](1) |
| 10 | Node ID Length | 1 | Unsigned char | [0..20] |
| 11 | NodeID | 0-20 | Unsigned char | ASCII String |
| 10 | Bit-packet part | Variable | Unsigned char | Variable (2) |
| 15 | Padding | 1 | Unsigned char | 0 |
| (1) | Value 60 indicates a leap second. | | | |
| (2) | The bit-packed part of each ConfigChange Record is composed of the definition of the new event type that was not included in the xml file shared by the client and server. The length of the bit-packed part is extended to be a multiple of 32-bit (4 byte) | | | |
| (3) | Variable length ASCII string | | | |

Table 1 shows that the configuration change record includes data concerning the length and type of the record, the time and date of the record, an identification of the node that generates the record, a bit packet part (described below) and a padding.

Any event generated by a client node may be identified by an identification, (ID). The ID of a definable event may be restricted to a limited range of available IDs, in order to easily distinguish the definable event defined at runtime from hardcoded events defined at system startup, and to prevent collisions between IDs of definable events and hardcoded events. Definable event IDs are specific to a client, which means that two or more clients can use the same control file and can define new events with the same event ID, and each defined new event conveying different information and having a different condition. More particularly, there can be one control file that includes definitions from a plurality of EBM clients of the same type, and there can be multiple control files, each corresponding to EBM clients of a different type.

The EBM server can decode an event with a specific ID by using the IP address of the reporting EBM client which is contained in the node ID field of the configuration change record or by using another identifier of the EBM client. Thus, the combination of the event ID and the IP-address uniquely defines the definable event. Further, several EBM clients can share the same control file with one EBM server.

The definition of the new or modified event may be included in the bit-packet part of the configuration change record of Table 1 and may have the following structure:
[ID] Identifier of the definable event
[Name] Name of the event
[Description] Brief description of the event
[Condition] Detailed condition that has been fulfilled which results in generation and transmitting the event from the EBM client to the EBM Server.
[ParameterList] Sequence (List) of parameters

Each parameter of the list may include the following:
[FieldType] Numeric value identifying the type of field: Numeric (unsigned integer, byte, long), enumerated, binary string, hexadecimal string, BCD, IP-Address format.
[FieldName] ASCII value giving the name of the filed
[Description] Brief description about the new parameter
[MaxValue] For numeric values, a maximum value that the field can take. For string values, a maximum length of the string.
[MinValue] For numeric values, a minimum value that the field can take. For string values, a minimum length of the string.
[ListOfValues] This attribute is optional, only sent and used when the parameter is an enumerated type. This attribute will be a sequence of pairs of values and descriptions:
[Value1] [Description1] [Value2] [Description2]...

Upon receipt of the configuration change record, the EBM server will add the new definition to the list of defined events already in the control file. Upon receipt of an event from the EBM client, the EBM server will try to match the event with the defined events in the control file. If the received event ID matches an event ID of the control file, the received event will be decoded by the EBM server.

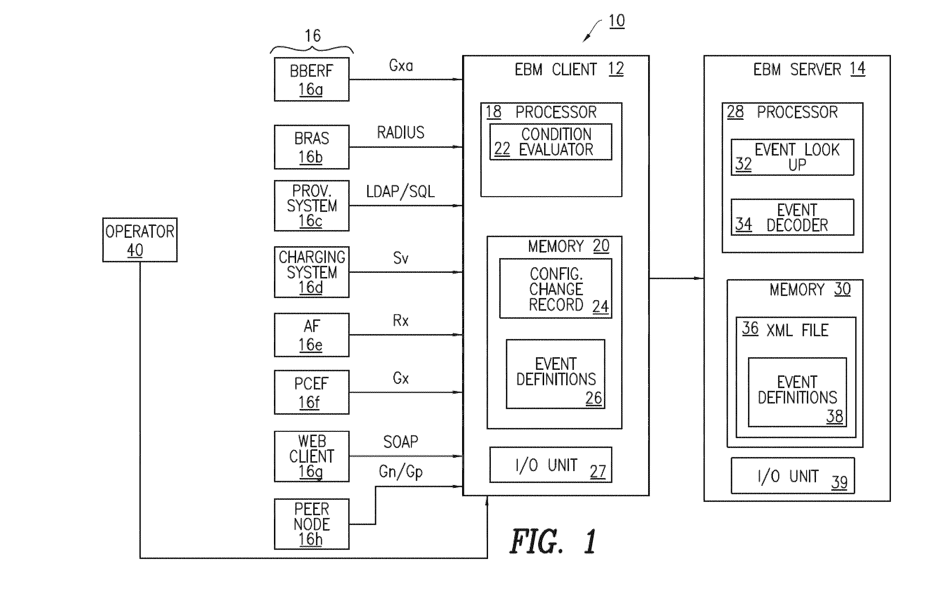

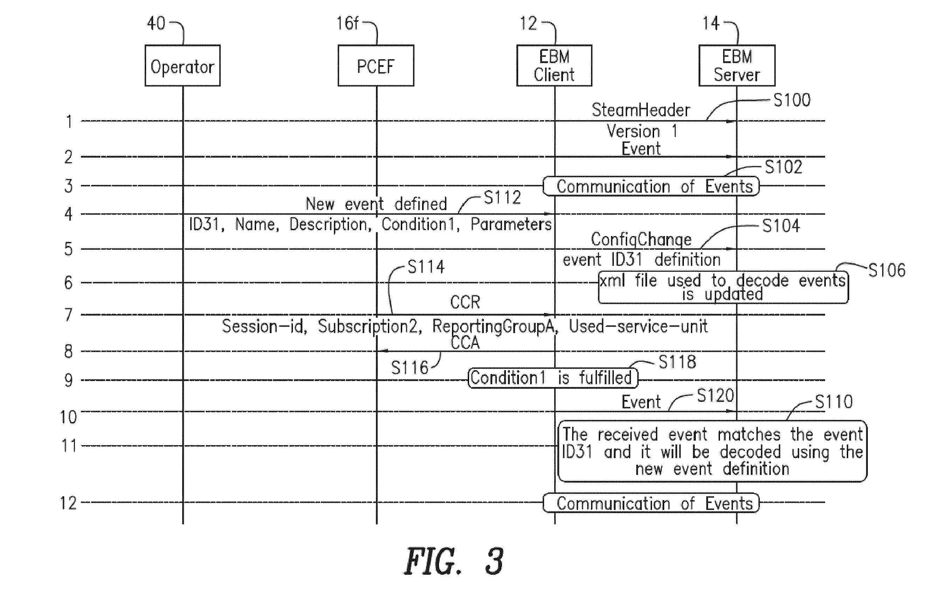

Referring now to the drawing figures in which like reference designators denote like elements, there is shown in FIG. 1 a block diagram of an EBM system 10 constructed in accordance with principles of the present invention. The EBM system 10 includes an EBM client 12, an EBM server 14 and a set of reporting entities 16 The reporting entities 16 may include a bearer binding and event reporting function (BBERF) 16a, a broadband remote access server (BRAS) 16b, a provisioning system 16c, a charging system 16d, an application function (AF) 16e, a policy charging and enforcement function (PCEF) 16f, a web client 16g and a peer node 16h such as a serving general packet radio service (GPRS) support node (SGSN) communicating with a gateway GPRS support node (GGSN) which includes a PCEF acting as an EBM client. Each of the reporting entities 16 connect to the EBM client by an appropriate interface, as shown in FIG. 1. Other entities may also be included or fewer entities than those shown in FIG. 1 may be included. Operation of the reporting entities 16 are known in the art. In operation, the reporting entities 16 report occurrences of conditions related to an event to the EBM client 12 via the input/output (I/O) unit 27.. In response to the occurrence of the condition, the EBM client 12 generates and sends an event to the EBM server 14 via the I/O unit 39.. The EBM client 12 includes a processor 18, a memory 20, and the I/O unit 27. The processor 18 implements a condition evaluator function 22 to evaluate the occurrence of the condition to determine if a report of the event to the EBM server 14 should occur. The memory 20 includes configuration change records 24 and event definitions 26. The configuration change records 24, that include the new event definitions 26, are sent to the EBM server 14 via the I/O unit 27. The event definitions 26 are based on information received by an operator or operational unit via the I/O unit 27. The EBM server 14 includes a processor 28, a memory 30, and the I/O unit 39. The processor 28 may include an event lookup function 32 to loop up event definitions 38 contained in an xml file 36 stored in memory 30. The processor 28 also includes an event decoder 34, to decode events received by the EBM server 14 via the I/O unit 39 that are matched to an event stored in the xml file 26. As shown in FIG. 1, an operator 40 is in communication with the EBM client node 12. The operator 40 may be a network operator, a service provider, or a system administrator, and its role in EBM is explained with reference to FIG. 3-6.

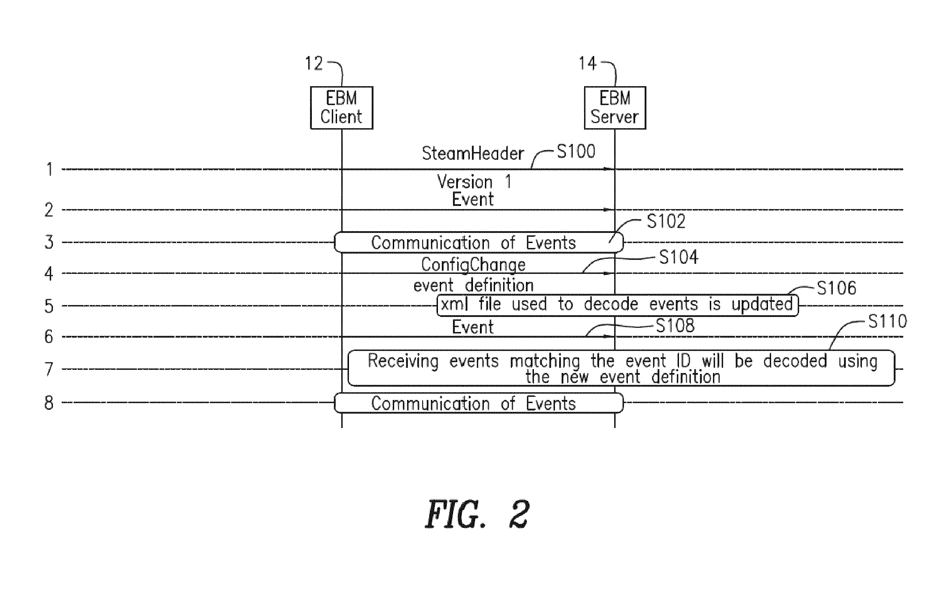

FIG. 2 illustrates a general procedure for updating and reporting new events. The EBM client 12 starts communication with the EBM server 14 by sending a stream header record with the version, e.g., version 1, of the xml file that the EBM client 12 is using (S100). Subsequently, the EBM client 12 sends events defined in the xml file shared between the EBM client 12 and the EBM server 14, based on a change in the internal state of the EBM client that matches an event defined in the xml file (S102), the change in internal state being based on the information received from a reporting entity 16. For a new event not already contained in the xml file or for an updated event, the EBM client 12 sends a configuration change record to the EBM server 14 (S104). In response to receiving the configuration change record, the EBM server 14 updates the xml file stored at the EBM server 14 with the new definitions (S106). Subsequently, when a newly defined event occurs, and is reported from the EBM client (S108), the event is decoded by the EBM server 14 using the new event definition (S110). As a consequence of sending a configuration change record to define a new event, transmission of an entire xml file to match the files in the client and server is avoided.

Referring now to FIGS. 3-6, several specific examples of updating an event definition using a configuration change record are explained. FIG. 3 illustrates a procedure for updating and reporting new events when a reporting entity is a policy charging and enforcement function 16f. In this particular embodiment, the EBM client may be a PCRF. The first steps S100 and S102 of FIG.3 are the same as in FIG. 2. An operator 40, e.g., a service provider, defines a new event that includes an event ID, ID31, a description of the event, a condition, the fulfillment of which triggers the event, and parameters of the event (S112). For example, the condition may be whether the accumulated usage for a bi-directional volume for a subscriber of a reporting group is greater than a threshold, for example, 1000. The list of parameters may include the subscriber ID field, the reporting group and the bidirectional volume, for example, 700. The EBM client 12, upon receipt of the newly defined event from the operator 40, sends a configuration change record to the EBM server 14 (S104). The EBM server 14 updates the xml file that contains the list and definitions of the events to include the new event definition (S106). The PCEF 16f sends a message reporting information related to the new event to the EBM client 12, (S114). The reporting message may include the following:
a. Subscription-Id = "Subscriber2"
b. Usage-Monitoring-Information
   i. Monitoring Key = ReportingGroupA
   ii. Used- Service-Unit
      1. CC-Total-Objects = 400

The values, Subscriber2 and ReportingGroupA, are examples only. It is understood that records can have other values. The EBM client 12, which may be a policy and charging rules function, sends a credit control answer (CCA) to the PCEF 16f (S116), and accumulates the reported volume, CC-total-objects = 400, whose value is now 1100 (700+400), since 700 was the initial value for the accumulated usage for the subscriber and applicable to the CC-Total-Objects. Thus, in this example, the condition of a bidirectional volume exceeding 1000 has occurred (S118). The EBM client then generates and sends the event to the EBM server (S120). The event may contain the following information:
a. ID: ID31
b. Name: Bidirectional_volume_surpassed
c. Description The bidirectional volume for reporting group "ReportingGroupA" for "Subscriber2" is greater than 1000
d. Condition: AccessData.subscriber.accumulatedUsage.reportingGroup["Reporting GroupA"].current["bidirVolume"] > 1000
e. List of parameters
   iii. [binary string] [Subscriber2]
   iv. [binary string] [ReportingGroupA]
   v. [binary string] [bidirVolume]
   vi. [unsigned integer] [1100]

In this example, the received event matches the event having the ID31 stored in the xml file at the EBM server 14, and the event will be decoded by the EBM server 14 using the corresponding event definition (S110). Decoding an event means that the EBM server, upon receiving a stream of bits, will determine which bits belong to each parameter based on the structure defined in the xml file. By transmitting the new event definition via a configuration change record, exchange of a complete xml file is avoided.

Note that in the example of FIG. 3, a PCRF acting as the EBM client 12 interacts with the PCEF 16f. The procedure for interaction between a PCRF acting as the EBM client 12 and a BBERF 16a is similar in terms of the types of conditions that can be defined. A difference is the protocol used to communicate with the PCRF. The BBERF uses Gxa protocol and the PCEF uses Gx protocol, as shown in FIG. 1. Similarly, the procedure for interaction between a PCRF acting as the EBM client 12 and a BRAS 16b is similar in terms of the types of conditions that can be defined. A difference is the protocol used to communicate with the PCRF. The BRAS 16b uses the RADIUS protocol and the PCEF uses Gx protocol.

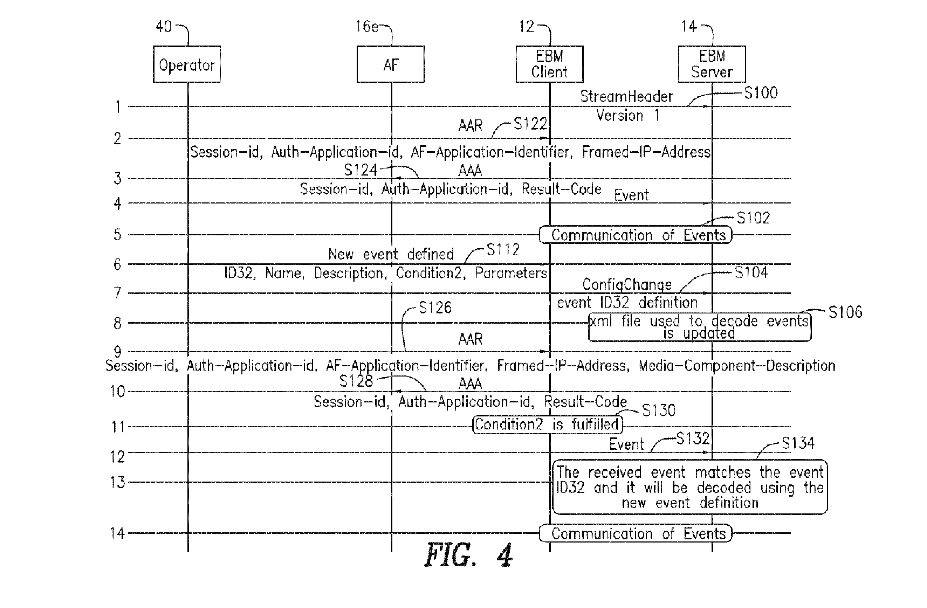

Another example of updating and using a definition of a new event is shown in FIG. 4 where the EBM client 12, which in this example is a PCRF, interacts with an application function (AF) 16e. The EBM client 12 initializes communication by sending a stream header to the EBM server 14 (S100). The AF 16e initiates a session with the EBM client 12 with an authentication application request (AAR) (S122). The EBM client 12 answers the AF 16e with an authentication application acknowledgement (AAA) (S124) The EBM client 12 may now send events to the EBM server 14 based on information from the AF 16e (S102). The operator 40 may define a new event and send the definition of the new event to the EBM client (S112). In this example, the new event definition may include the following information:
a) ID of the event
b) Name of the event
c) Brief description of the event
d) Condition, which if fulfilled, causes this event to be sent from the EBM client (PCRF) to the EBM server. In this example, the condition set by the operator checks if the media flow direction of any media-subcomponent has been set to bidirectional.
e) List of parameters contained in the event (parameters which are selected from the selectable parameters that the EBM client publishes to the operator). In this example, among the list of selectable parameters, the operator selects the Session-Id field, the Media-Component-Description, and the list of Media-Sub-Components.

In response to receiving the new definition from the operator 40, a configuration change record having the new definition is sent to the EBM server 14 by the EBM client 12 (S104). The EBM server 14 then updates the xml file with the new event definition (S106). The AF 16e then sends an AAR message (S126) to the EBM client 12 that may contain, for example, the following information:
a) Session-Id = "Sessionld5"
b) Auth-Application-Id = 16777236
c) AF-Application-Identifier = "Handbook"
d) Framed-IP-Address = 159.107.20.18
e) Media-Component-Description
   i. Media-Component-Number = 1
   ii. AF-Application-Identifier = "Handbook"
   iii. Media-Sub-Component
      1. Flow-Number = 1
      2. Flow-Description = UL and DL
The session ID identifies the session, the auth-application ID identifies the application authentication, the AF application identifier identifies the application function, and the framed IP address identifies the IP address used by the user equipment (UE) to connect to the network The media component description includes the media component number, the application function application identifier, a flow number and whether the flow is on the uplink or downlink or both. The media component is part of the AF session description and conveys information that may include media type, e.g., audio, video or data, IP address, ports and bandwidth. An AF session may contain one or more media components that may be composed of subcomponents such as real time transfer protocol (RTP) or real time transfer control protocol (RTCP)., The EBM client 12 sends an AAA message to acknowledge receipt of the AAR message (S128). The EBM client 12 analyzes the list of media components and detects that a media subcomponent is bidirectional, and determines therefore, that the condition that triggers reporting of this event has been fulfilled (S130). The EBM client 12 then generates and reports the event to the EBM server 14 (S132). This report includes all the information defined by the operator 40 in step S112. The EBM server 14 detects that the received event matches the definition of the definable event ID32 contained in the xml file (S134). Once the EBM server 14 determines the event definition from the matching, the EBM may decode the event in order to provide event information to the operator 40 or a service provider. Once again, by sending a definition of a new event in a configuration change record, transmission of an updated xml file is not required.

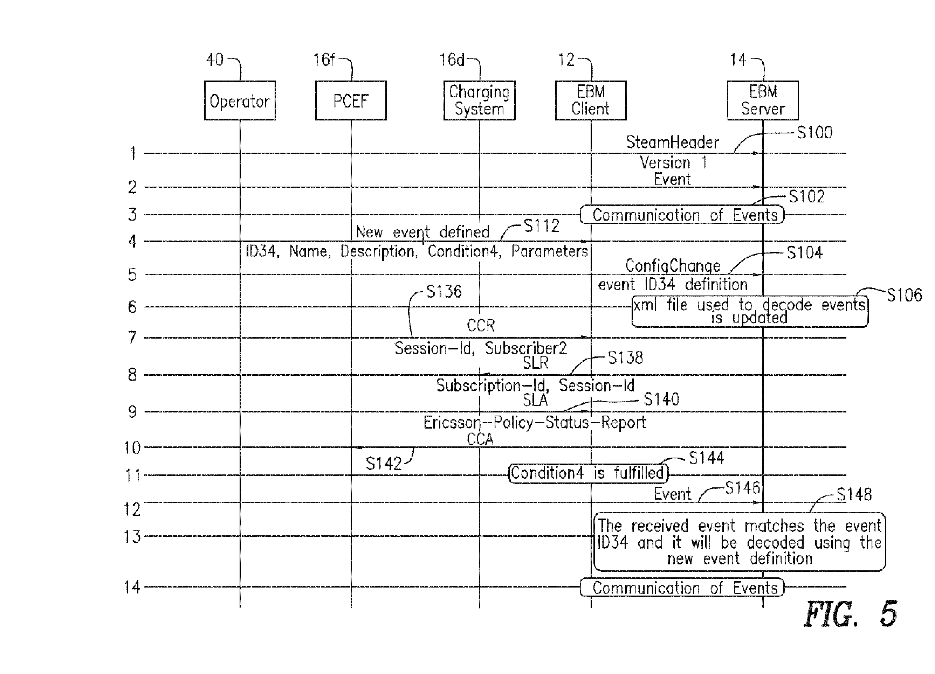

FIG. 5 illustrates an example of a procedure for updating and detecting new events utilizing a PCEF 16f and an online charging system 16d. An online charging system performs real-time credit control, including transaction handling, rating, online correlation and management of subscriber accounts. The initial steps of setting up communications are the same as in FIG. 2 as shown for steps S100 and S102. A new event is defined by the operator 40 and sent to the EBM client (S112). The operator 40 provides the following information:
a) ID of the event
b) Name of the event
c) Brief description of the event
d) Condition, which if fulfilled, makes this event to be sent from the EBM client (PCRF) to the EBM server. In this example, the condition set by the operator checks if the subscriber has Policy Counters defined at the Online Charging System.
e) List of parameters contained in the event (parameters which are selected from the selectable parameters that the EBM client publishes to the operator). In this example, among the list of selectable parameters, the operator selects the Subscriber-Id field, and the list of Policy Counters defined for subscriber at the Charging System.

In response to the information provided by the operator 40, a configuration change record containing the event definition is sent from the EBM client 12 to the EBM server 14 (S104). The EBM server 14 updates the xml file to contain the new definition (S106). The PCEF 16f sends a credit control request (CCR) message to the EBM client 12 (S136) with, for example, the following information:
a) Session-Id
b) Subscription-Id = "Subscriber2"

The session ID identifies a communication session with the subscriber identified by the subscriber ID. The policy and charging rules function (PCRF), determines if, for this subscriber, there are policy counters available in the selected Online Charging System for the subscriber. A policy counter transports threshold information and informs the PCRF in real time of monetary events, such as whether a subscriber has exceeded a spending threshold, volume consumption related events time consumption related events, and other types of events. If the configuration for the subscriber at the PCRF states that policy counters have been configured for the subscriber, then the PCRF sends a spending limit request (SLR) message to the Online Charging System in order to request the available policy counters. The SLR-Request-Type is set to INITIAL Request. The PCRF may use a configured traffic identity in the Subscription-Id Attribute Value Pair (AVP) of the SLR message to access the subscriber profile.

The PCRF receives a spending limit answer (SLA) message from the charging system with the policy counters assigned to the subscriber (S140). The EBM client 12 acknowledges the reception of the CCR by sending a CCA to the PCEF 16f (S 142). The PCRF , acting as the EBM client 12, detects that there are policy counters for the subscriber included in the CCR request sent at step S136. As a consequence, the EBM client 12 determines that the condition set forth in the definition transmitted at step S112 has been fulfilled (S 144). The EBM client 12 generates and sends the event to the EBM server (S146). The EBM server 14 determines that the event matches event ID34 and decodes the new event (S148). The EBM server 14 decodes the event in order to provide event information to the operator 40 or a service provider. Once again, by sending a definition of a new event in a configuration change record, transmission of an entire updated xml file is not required.

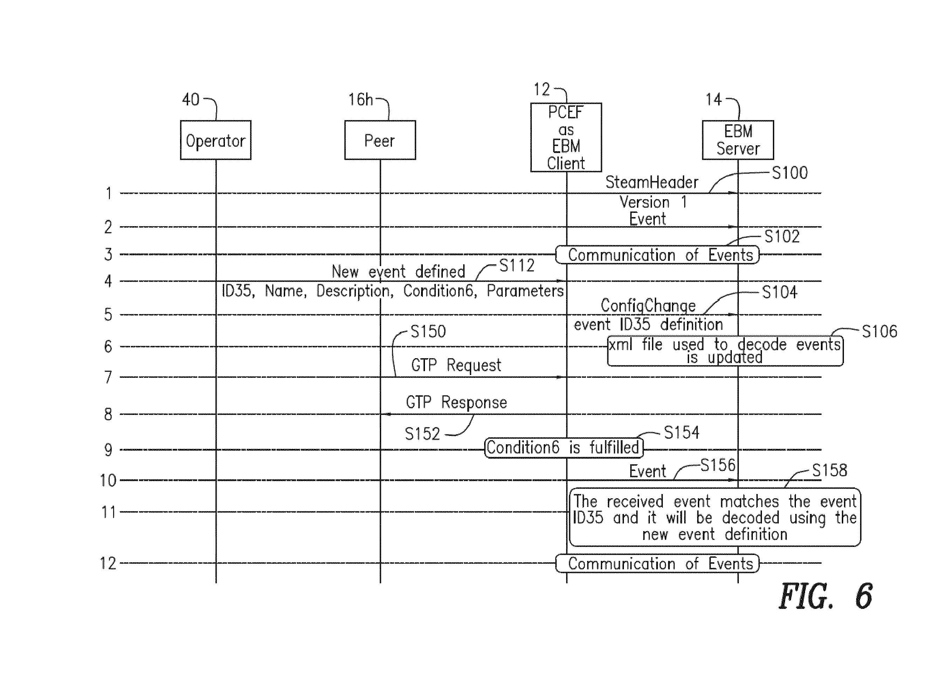

FIG. 6 illustrates a procedure for updating and detecting new events utilizing a PCEF 16f as the EBM client 12. The initial steps of setting up communications are the same as in FIG. 2 as shown for steps S100 and S102. A new event is defined by the operator 40 and sent to the EBM client (S112). The operator 40 provides the following information:
a) ID of the event
b) Name of the event
c) Brief description of the event
d) Condition, which if fulfilled, causes this event to be sent from the EBM client (PCEF) to the EBM server. In this example, the condition set by the operator to trigger the event is the reception of a GTP request at the PCEF.
e) List of parameters contained in the event (parameters which are selected from the selectable parameters that the EBM Client publishes to the operator). In this example, among the list of selectable parameters, the operator selects the allocated UE IP-Address, the Subscriber-ID, the EPS_BEARER_ID and the Bearer Cause.

The EBM client sends a configuration change record that includes the newly defined event to the EBM server 14 (S104). The EBM server 14 updates the xml file with the new definition (S106). Subsequently, a peer node 16h sends a GTP request to the PCEF acting as the EBM client 12 (S150). The peer node 16h may be a serving general packet radio service (GPRS) support node (SGSN) in communication with a gateway GPRS support node (GGSN) that may comprise the PCEF. The PCEF can be a gateway GPRS support node (GGSN). The EBM client 12 acknowledges receipt of the GTP request by sending a GTP response to the peer 16h (S152). In this example, receipt of the GTP request is the fulfillment of the condition triggering the event defined by the operator 40 in step S112 (S154). Accordingly, the EBM client generates the defined event and sends the event to the EBM server (S156). The generated event includes the following exemplary information included in fields as described above for the bit-packet part of the configuration change record of Table 1:
a) ID: ID35
b) Name: GTP_Request_received
c) Description A GTP request from peer A has been received.
d) Condition GTP.Request.received() == true
e) List of parameters
   i. [IP-Address] [UE-IP-Address]
   ii. [binary string] [Subscriber-Id]
   iii. [unsigned integer] [EPS_BEARER_ID]
   iv. [unsigned integer] [Bearer Cause]

The EBM server detects that the received event matches the definition of the new event having the ID35 and then decodes the event (158). As explained above, using a configuration change record to define a new event avoids transmission of an entire xml file.

In a manner similar to the procedure of FIG. 6, other entities such as an AF 16e, BRAS 16b, or a BBERF 16a may act as the EBM client 12, and with or without involving a peer node to fulfill the condition. A difference between these embodiments is the protocol used for communication between the entity acting as the EBM client 12 and the other entities.

Thus, in the embodiments described herein, the EBM server is automatically informed every time a new event is defined, without exchanging a new version of the control file. When the operator needs a new event it is not necessary to define or modify this new event in the control file, namely, in the xml file, and distribute the control file to the EBM server and all EBM clients. The operator only needs to define a new event or modify an existing event in the EBM client, and the EBM client submitting a configuration change record to notify the EBM server of the new or modified event. The embodiments described herein provide the framework for the operator to define new events by providing the following attributes, as described above with reference to the bit-packet part of the configuration change record of Table 1:
a) Name of the event
b) Brief description of the event
c) Condition fulfilled
d) List of parameters conveyed by the event

By sending only the configuration change record, rather than an entire control file, which may contain only small changes, bandwidth and network resources are conserved, and operator intervention may be reduced.

Thus, in some embodiments, a method includes receiving at an EBM client a new definition of an event from one of an operational unit and an operator, the new definition including an event identifier and a condition, the fulfillment of which triggers sending the event, as newly defined, to the EBM server. The method further includes sending a configuration change record to the EBM server, the configuration change record informing the EBM server of the new definition of the event to enable the EBM server to update the control file.

The present invention can be realized in hardware, or a combination of hardware and software. Any kind of computing system, or other apparatus adapted for carrying out the methods described herein, is suited to perform the functions described herein. A typical combination of hardware and software could be a specialized computer system, having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A method of updating event definitions to a control file of an event based monitoring, EBM, server (14) in a wireless communication network, the update avoiding an exchange of a complete control file having updated and non-updated event definitions between at least one EBM client (12) and the EBM server, the method carried out at an EBM client (12) and comprising:
receiving (S112) at an EBM client (12) a new definition of an event from one of an operational unit and an operator (40), the new definition including an event identifier and a condition, the fulfillment of which triggers sending the event to the EBM server; and
sending (S104) a configuration change record to the EBM server (14), the configuration change record informing the EBM server of the new definition of the event to enable the EBM server to update the control file.

2. The method of Claim 1, further comprising generating an event in response to fulfillment of the condition (S118) and sending (S120) the event to the EBM server (14).

3. The method of Claim 1, wherein the new definition of the event includes a list of at least one parameter further defining relevant information concerning the event.

4. The method of Claim 1, wherein the control file is an xml file.

5. The method of Claim 1, wherein the EBM client (12) is a policy and charging rules function, PCRF, and the condition is an accumulated usage of a reporting group for a subscriber.

6. The method of Claim 1, wherein the EBM client (12) is a policy and charging rules function, PCRF, and the condition is a notification to the PCRF of reception of a general packet radio service, GPRS, tunneling protocol, GTP, request at a policy and charging enforcement function, PCEF.

7. The method of Claim 1, wherein the EBM client (12) is a policy and charging rules function, PCRF, and the condition is a field value of a media component indicated by an application function, AF.

8. The method of Claim 1, wherein the EBM client (12) is a policy and charging rules function, PCRF, and the condition is a reception of a RADIUS message from a broadband remote access server, BRAS.

9. The method of Claim 1, wherein the EBM client (12) is a policy and charging rules function, PCRF, and the condition is a notification to the PCRF of reception of a general packet radio service, GPRS, tunneling protocol, GTP, request at a bearer binding and event reporting function, BBERF.

10. A method of updating event definitions to a control file of an event based monitoring, EBM, server (14) in a wireless communication network, the update avoiding an exchange of a complete control file with updated and non-updated event definitions between at least one EBM client (12) and the EBM server, the method carried out at the EBM server (14) and comprising:
receiving (S104) at the EBM server from an EBM client (12) a configuration change record, the configuration change record including a new definition of an event;
updating (S106) at the EBM server the control file to one of include and modify the new definition;
receiving (S120) at the EBM server an event generated by the EBM client (12), the event defined by the configuration change record;
looking (S110) up the event in the control file of the EBM server to determine that the event is defined; and
decoding (S110) the event at the EBM server based on information provided in the configuration change record.

11. The method of Claim 10, wherein the configuration change record includes an event identifier of the event and a condition, the fulfillment of which triggers the event being received at the EBM server (14).

12. The method of Claim 11, wherein the configuration change record further includes a client identifier identifying the EBM client (12) that provides the configuration change record.

13. The method of Claim 12, wherein the control file includes definitions from a plurality of EBM clients, the definitions being associated with respective EBM clients via client identifiers.

14. The method of Claim 11, wherein the configuration change record includes a field indicating a version of the control file being used by the EBM client (12).

15. The method of Clam 11, wherein the configuration change record includes a parameter list and a description and value of each parameter in the list, the parameters depending upon the event.

16. An event based monitoring, EBM, system, comprising:
an EBM client (12) configured to:
receive a new definition of an event from a system associated with an operator (40); and
send a configuration change record containing the new definition of the event to an EBM server (14); and
the EBM server (14) configured to:
receive the configuration change record; and
update a control file having event definitions to one of include and modify the new definition of the event.

17. The EBM system of Claim 16, wherein:
the EBM client is further configured to:
determine if a condition related to the event is fulfilled; and
transmit the event to the EBM server if the condition is fulfilled; and
the EBM server is further configured to:
compare the event to event definitions contained in the control file; and
decode the event if the event definition is contained in the control file.

18. The EBM system of Claim 17, wherein the configuration change record includes an event identifier and a description of the condition.

19. The EBM system of Claim 17, wherein the condition is defined by an operator at a broadband remote access server, BRAS.

20. The EBM system of Claim 17, wherein the condition is defined by an operator at an operation charging system, OCS.
